Europäisches Patentamt

European Patent Office

Office européen des brevets

(11) Veröffentlichungsnummer: **0 075 044**
**A1**

(12) **EUROPÄISCHE PATENTANMELDUNG**

(21) Anmeldenummer: **81109197.4**

(22) Anmeldetag: **29.10.81**

(51) Int. Cl.³: **G 01 V 9/04,** G 01 J 1/24

(30) Priorität: **19.09.81 CH 6036/81**

(43) Veröffentlichungstag der Anmeldung: **30.03.83**
**Patentblatt 83/13**

(84) Benannte Vertragsstaaten: **AT DE FR GB IT**

(71) Anmelder: **ELESTA AG ELEKTRONIK, CH-7310 Bad Ragaz (CH)**

(72) Erfinder: **Reiner, Eugen, Feld, CH-7324 Vilters (CH)**

(74) Vertreter: **Riederer, Conrad A., Dr., Bahnhofstrasse 10, CH-7310 Bad Ragaz (CH)**

(54) **Einrichtung zur Lichtreservemessung bei Lichtschranken.**

(57) Das Abdeckelement (17) besteht aus einem Kunststoffband mit einem aufgedruckten Strichmuster (23), wobei verschiedene Regionen (25) bestehen, die unterschiedliche Lichtdurchlässigkeit aufweisen. Wird das Abdeckelement in das Lichtbündel einer Lichtschranke gehalten und so bewegt, bis die Lichtintensität des Lichtbündels so vermindert wird, daß die Lichtschranke schaltet, so ist an der Skala (2I) die Lichtreserve der Lichtschranke ablesbar. Da im Gegensatz zu den bisherigen Methoden nicht einfach das Lichtbündel, z.B. zur Hälfte abgedeckt wird, sondern eine Intensitätsverminderung über den ganzen Querschnitt des Lichtbündels erfolgt, besteht keine Gefahr einer falschen Lichtreservemessung, wie sie auftreten kann, wenn das Lichtbündel nur teilweise auf die Linse des Lichtempfängers auffällt und der nicht-beleuchtete Teil der Linse abgedeckt wird, in der falschen Meinung, dadurch die einfallende Lichtmenge zu verkleinern.

-1-

---

Einrichtung zur Lichtreservemessung bei Lichtschranken

---

Die Erfindung betrifft eine Einrichtung zur Lichtreservemessung bei Lichtschranken, mit einem Abdeckelement zur
teilweisen Abdeckung des Lichtbündels.

Bei Lichtschranken fällt in der Regel nur ein Teil des vom
Lichtsenders ausgestrahlten Lichts zum Lichtempfänger zurück.
Lichtverluste können entstehen durch Verstaubung der Linse
des Lichtsenders und/oder Lichtempfängers und wegen der
Divergenz des Lichtbündels. Bei Reflexlichtschranken wird
vom Reflektor nur ein Teil des Lichts zurückgeworfen, wobei
durch Verstaubung des Reflektors der Anteil des zurückgeworfenen Lichtes noch vermindert werden kann. Des weiteren
ist es möglich, dass bei ungeschickter Montage der Lichtschranke der Lichtempfänger nur vom Rand des eintreffenden
Lichtbündels berührt oder bei Reflektions-Lichtschranken
der Lichtstrahl nur teilweise dem Reflektor beaufschlagt
wird. In solchen Fällen genügt dann eine geringe Lichtverminderung, z.B. durch weitere Verstaubung, dass die Lichtschranke schaltet, also nicht mehr richtig funktioniert,
obwohl keine Unterbrechung des Lichtbündels stattfindet.
Um Fehloperationen zu vermeiden ist es wichtig, die Lichtreserve einer Lichtschranke zu kennen.

-2-

Bisher wurde die Lichtreserve sehr grob durch Abdecken eines Teils der Linse beim Lichtempfänger oder des Reflektors ermittelt. Schaltet beispielsweise die Lichtschranke, wenn die Hälfte der Linsenfläche abgedeckt ist, so besitzt sie eine Lichtreserve von hundert Prozent. Schaltet sie erst, nachdem drei Viertel der Linse abgedeckt wurden, so beträgt die Lichtreserve dreihundert Prozent. In der Praxis ist diese Methode schon deshalb ungenau, weil die prüfende Person meist ungenau schätzt, wie gross der von ihr abgedeckte Teil des runden Querschnitts überhaupt ist. Abgesehen davon ist die geschilderte Ermittlung der Lichtreserve jedoch nur bei idealen Verhältnissen richtig, d.h. wenn das Lichtbündel voll auf den Reflektor bzw. die Linse auffällt. Ob dies wirklich der Fall ist oder nicht, lässt sich nicht leicht ermitteln, weil als Licht normalerweise Infrarotlicht verwendet wird, das für das menschliche Auge nicht sichtbar ist. Es kommt daher öfters vor, dass eine Lichtschranke funktioniert, obwohl das Lichtbündel nur Randgebiete des Reflektors bzw. der Empfängerlinse beleuchtet. Wird unter solchen Umständen der unbeleuchtete Teil des Reflektors oder der Linse abgedeckt, so wird eine nicht vorhandene Lichtreserve vorgetäuscht. Trotz der scheinbar vorhandenen Lichtreserve kann es dann z.B. durch Verstaubung, rasch zu einer Fehlfunktion der Lichtschranke kommen.

Es ist Aufgabe der vorliegenden Erfindung, mit einfachen Mitteln eine Einrichtung zur Lichtreservemessung zu schaffen, welche bei mangelhafter Montage der Lichtschranke nicht zu Fehlergebnissen führt.

Gemäss der Erfindung wird dies dadurch erreicht, dass das Abdeckelement derart ausgebildet ist, dass es die Lichtintensität des Lichtbündels über den ganzen Querschnitt praktisch gleichmässig vermindert und Regionen mit unterschiedlicher Lichtdurchlässigkeit aufweist. Da mit dem erfindungsgemässen Abdeckelement immer der ganze Querschnitt des Lichtbündels abgedeckt wird, wird die Intensität des gesamten Lichtbündels

-3-

vermindert. Es findet also nicht eine bloss teilweise Beschneidung des Lichtstrahls statt, die, wie vorher erwähnt, zu fehlerhaften Resultaten führen kann, wenn der Lichtstrahl nicht genau ausgerichtet ist.

Die Regionen mit unterschiedlicher Lichtdurchlässigkeit gehen vorteilhaft stufenlos ineinander über. Dies ermöglicht es, das Abdeckelement relativ kurz zu halten, wobei bewusst in Kauf genommen wird, dass geringe Unterschiede der Lichtdurchlässigkeit über den Querschnitt des Lichtbündels vorhanden sind. Zweckmässigerweise werden die Regionen durch ein Strichmuster gebildet. Dies ermöglicht eine besonders einfache Anfertigung des Abdeckelements. So kann beispielsweise das Strichmuster durch keilförmige Striche gebildet werden, die sich über die wirksame Länge des Abdeckelementes erstrecken. Ein solches Strichmuster ist zeichnerisch sehr einfach herzustellen und kann auf fotografischem oder drucktechnischem Wege einfach reproduziert werden. Dasselbe gilt auch für ein Abdeckelement, bei dem die Regionen unterschiedlicher Lichtdurchlässigkeit durch verschiedene Raster gebildet werden. Eine besonders einfache Ausführungsform des Abdeckelementes kann ein Strichmuster auf einer durchsichtigen Unterlage, z.B. auf einem flexiblen Kunststoffband, aufweisen. Dies ermöglicht eine besonders einfache und billige Fertigung. Dasselbe gilt auch für ein Abdeckelement, dessen Unterlage als praktisch runde Kunststoffscheibe ausgebildet ist.

Zweckmässigerweise weist das Abdeckelement eine Skalaeinteilung auf, welche die Lichtreserve und/oder Lichtdurchlässigkeit anzeigt. Auf diese Weise liefert die Einrichtung ein zahlenmässig erfassbares Messresultat. Besonders praktisch ist es, wenn das Abdeckelement am Gehäuse verschieb- oder verdrehbar angeordnet ist. Dabei wird vorteilhaft eine Rückzugfeder vorgesehen, welche das Abdeckelement in eine Ruhelage

-4-

zurückzieht, in welcher es nicht in das Lichtbündel ragt oder dieses praktisch nicht beeinflusst. Will man die Lichtreserve feststellen, so genügt es, das Abdeckelement so weit zu bewegen, bis die Lichtschranke anspricht, worauf der Wert der Lichtreserve abgelesen werden kann.

Die Einrichtung kann so ausgebildet sein, dass das Abdeckelement beim Lichtempfänger in das Lichtbündel ragt. Da dort das Lichtbündel einen relativ grossen Durchmesser aufweist, muss das Abdeckelement nicht sehr fein ausgeführt werden. Es wäre aber auch möglich, dass das Abdeckelement beim Lichtsender in das Lichtbündel ragt.

Ausführungsbeispiele der Erfindung werden nun unter Bezugnahme auf die Zeichnung beschrieben. Es zeigt:

Fig. 1     eine Reflexlichtschranke mit eingebautem Abdeckelement,

Fig. 2     ein separates Abdeckelement mit einem Strichmuster,

Fig. 3     ein Abdeckelement wie in Fig. 2, jedoch mit einem Strichmuster mit keilförmigen Strichen, und

Fig. 4     ein Abdeckelement in Form einer runden Scheibe.

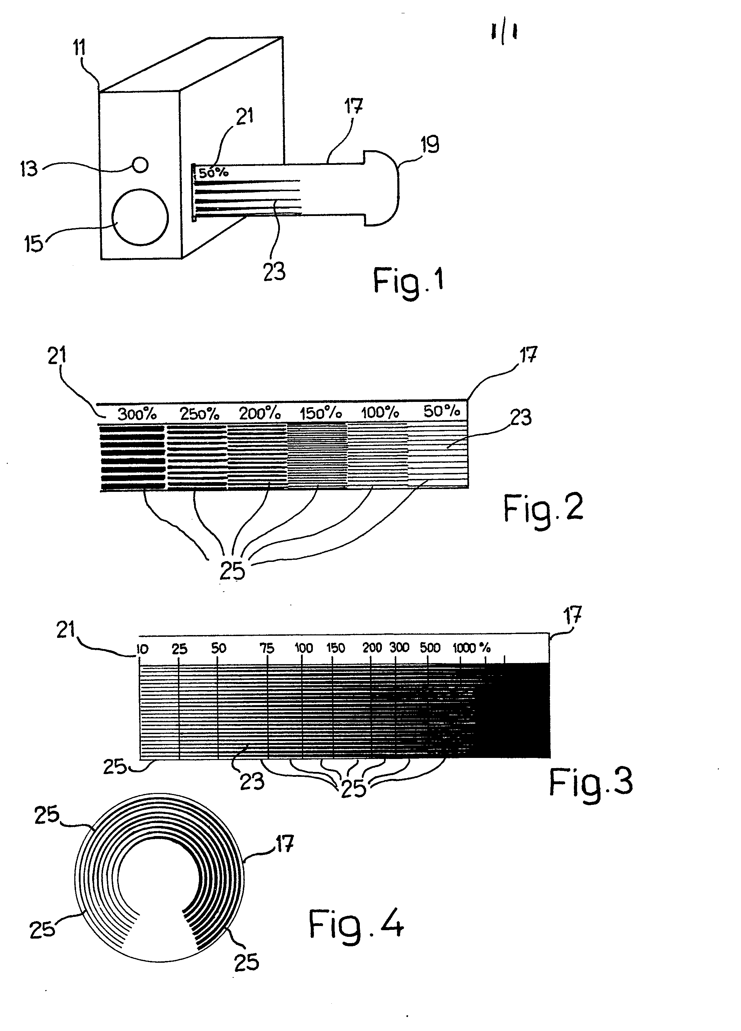

In Figur 1 ist eine Reflexlichtschranke 11 dargestellt, wobei die Linse 13 für den Lichtsender und die Linse 15 für den Lichtempfänger sichtbar sind. Ebenfalls sichtbar ist ein eingebautes Abdeckelement 17, das normalerweise durch eine nicht sichtbare Feder in das Gehäuse gezogen wird, so dass nur der Lappen 19 zum Herausziehen aus dem Gehäuse ragt. In diesem Falle besteht das Abdeckelement vorteilhaft aus einem lichtdurchlässigen, flexiblen Kunststoffband. Es besitzt ein Strichmuster 23 mit einer Skaleneinteilung 21, welche die Lichtreserve und/oder Lichtdurchlässigkeit angibt.

-5-

Ein anderes Ausführungsbeispiel eines Abdeckelements 17 ist aus Figur 2 ersichtlich. Wiederum ist eine Skala 21 vorgesehen, welche die Lichtreserve anzeigt. Die Skala könnte aber auch zusätzlich oder anstelle der Lichtreserve die Lichtdurchlässigkeit anzeigen. Die unterschiedliche Lichtdurchlässigkeit wird durch ein Strichmuster 23 bewirkt, das in verschiedenen Regionen 25 unterschiedlich ausgebildet ist. Dieses Strichmuster kann beispielsweise auf das durchsichtige Kunststoffband aufgedruckt sein. Statt ein Strichmuster kann auch jedes andere Muster verwendet werden, das eine bestimmte Region praktisch gleichmässig abdunkelt. Wichtig ist lediglich, dass das Muster nicht zu grob ist. Als durchsichtige Unterlage eignen sich auch andere Materialien als durchsichtiges Kunststoffband, z.B. auch Glas. Eine vorteilhafte Ausbildung des Strichmusters wird durch die Verwendung keilförmiger Striche erzielt, wie dies in Figur 1 und 3 dargestellt ist. Dadurch ergeben sich Regionen 25, die stufenlos ineinander übergehen.

Währenddem in Figur 1 das Abdeckelement eingebaut ist, kann das Abdeckelement gemäss Figur 2 als separate Einrichtung ausserhalb der Lichtschranke zum Abdecken des Lichtstrahls vor dem Eintreffen auf die Linse 15 des Lichtempfängers dienen. Grundsätzlich wäre es auch möglich, das Abdeckelement beim Lichtsender, also z.B. nach der Linse 13, in das Lichtbündel ragen zu lassen.

Während das Abdeckelement in den Figuren 1 bis 3 eine praktisch rechteckige Form aufweist, besitzt das Abdeckelement gemäss Figur 4 die Form einer praktisch runden Scheibe. Eine solche Scheibe kann separat verwendet werden oder am oder im Gehäuse 11 drehbar angeordnet sein.

-6-

Patentansprüche

1. Einrichtung zur Lichtreservemessung bei Lichtschranken, in einem Abdeckelement zur teilweisen Abdeckung des Lichtbündels, dadurch gekennzeichnet, dass das Abdeckelement (17) derart ausgebildet ist, dass es die Lichtintensität des Lichtbündels über den ganzen Querschnitt praktisch gleichmässig vermindert und Regionen (25) mit unterschiedlicher Lichtdurchlässigkeit aufweist.

2. Einrichtung nach Anspruch 1, dadurch gekennzeichnet, dass die Regionen mit unterschiedlicher Lichtdurchlässigkeit stufenlos ineinander übergehen.

3. Einrichtung nach Anspruch 1 oder 2, dadurch gekennzeichnet, dass die Regionen (25) unterschiedlicher Lichtdurchlässigkeit durch ein Strichmuster (23) gebildet werden.

4. Einrichtung nach Anspruch 3, dadurch gekennzeichnet, dass das Strichmuster durch keilförmige Striche gebildet wird, die sich über die wirksame Länge des Abdeckelements (17) erstrecken.

5. Einrichtung nach Anspruch 1 oder 2, dadurch gekennzeichnet, dass die Regionen (25) unterschiedlicher Lichtdurchlässigkeit durch verschiedene Raster gebildet werden.

6. Einrichtung nach einem der Ansprüche 3 oder 5, dadurch ge- kennzeichnet, dass sich das Strichmuster oder der Raster auf einer durchsichtigen Unterlage befindet.

7. Einrichtung nach Anspruch 6, dadurch gekennzeichnet, dass die Unterlage ein flexibles Kunststoffband ist.

8. Einrichtung nach Anspruch 6, dadurch gekennzeichnet, dass die Unterlage eine praktisch runde Kunststoffscheibe ist.

9. Einrichtung nach einem der Ansprüche 1 bis 8, dadurch gekennzeichnet, dass das Abdeckelement (17) eine Skalaeinteilung (21) aufweist, welche die Lichtreserve und/oder Lichtdurchlässigkeit anzeigt.

10. Einrichtung nach einem der Ansprüche 1 bis 9, dadurch gekennzeichnet, dass das Abdeckelement (17) am Gehäuse der Lichtschranke (11) verschieb- oder verdrehbar angeordnet ist.

11. Einrichtung nach Anspruch 10, dadurch gekennzeichnet, dass eine Rückzugfeder vorgesehen ist, welche das Abdeckelement (17) in eine Ruhelage zurückzieht, in welcher es die Lichtintensität des Lichtbündels praktisch nicht beeinflusst.

12. Einrichtung nach einem der Ansprüche 1 bis 11, dadurch gekennzeichnet, dass das Abdeckelement (17) beim Lichtempfänger (15) in das Lichtbündel ragt.

13. Einrichtung nach einem der Ansprüche 1 bis 11, dadurch gekennzeichnet, dass das Abdeckelement (17) beim Lichtsender (13) in das Lichtbündel ragt.

1/1

Fig.1

Fig.2

Fig.3

Fig.4

0075044

<table>
<tr><td colspan="3">Europäisches Patentamt</td><td>EUROPÄISCHER RECHERCHENBERICHT</td><td>Nummer der Anmeldung<br>EP 81 10 9197</td></tr>
</table>

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | **DE - C - 690 378** (P. GOSSEN)<br>  * Seite 1, Zeilen 1-13; Figuren 1-4 * | 1,3,5, 7,8 |
| | -- | |
| | **DE - A - 1 903 122** (GAF CORP.)<br>  * Seite 8, Zeile 1 - Seite 9, Zeile 1; Figur 2 * | 1,2,8, 9 |
| | ---- | |

**KLASSIFIKATION DER ANMELDUNG (Int. Cl.)**

G 01 V 9/04
G 01 J 1/24

**RECHERCHIERTE SACHGEBIETE (Int. Cl.)**

G 01 V 9/04
G 01 D 21/04
G 01 J 1/22
     1/24

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-01-1982 | GALLO |

EPA form 1503.1 06.78